# EUROPEAN PATENT APPLICATION

(11) **EP 4 668 214 A1**
(43) Date of publication of application: **24.12.2025**
(21) Application number: 23932222.5
(22) Date of filing: 06.10.2023
(51) Int. Cl.: G06T 11/60, G06T 7/194, G06F 3/14, G06T 7/60, G06T 7/90

(54) **ELECTRONIC DEVICE AND METHOD FOR REGENERATING IMAGE**

(30) Priority: 03.04.2023 KR 20230043611; 31.08.2023 KR 20230115714
(71) Applicant: Samsung Electronics Co., Ltd., Suwon-si, Gyeonggi-do 16677 (KR)
(72) Inventor: LEE, Wonjae, Suwon-si, Gyeonggi-do 16677 (KR); PARK, Jaewon, Suwon-si, Gyeonggi-do 16677 (KR); BAIK, Jeongeui, Suwon-si, Gyeonggi-do 16677 (KR); LEE, Bomi, Suwon-si, Gyeonggi-do 16677 (KR); KWON, Minsoo, Suwon-si, Gyeonggi-do 16677 (KR); YIM, Soeyoun, Suwon-si, Gyeonggi-do 16677 (KR)
(74) Representative: HGF
(86) International application number: PCT/KR2023/015438
(87) International publication number: WO 2024/210288

(57) **Abstract**

An electronic device and a method for regenerating an image are provided. The electronic device comprises a display and at least one processor. The at least one processor identifies the type of an original image. The at least one processor identifies, on the basis of the identified type of the original image, information regarding a main object and information regarding a background region, which are included in the original image. The at least one processor generates a surrounding region of the original image on the basis of the information regarding the main object and the information regarding the background region to regenerate the original image as an image corresponding to the size of the display. The at least one processor controls the display to display the regenerated image.

## Description

### [Technical Field]

Embodiments herein relate to an electronic device and a method for regenerating an image.

### [Background Art]

Recent electronic devices include displays of various sizes. The displays may show various types of information and may also display images such as wallpapers even when a user is not using the electronic devices. A user can configure an image stored in an electronic device or an image received from an external source as a wallpaper. However, an image selected by the user may not match the size of the display. Alternatively, a user may own various electronic devices, and the sizes of displays on the various electronic devices may vary. An image configured as a wallpaper by the user may match the size of a display included in one electronic device, but the same image may not match the size of a display of another electronic device.

The above-described information may be provided as background art (related art) to aid in understanding the disclosure. No assertion or determination is made as to whether any of the forgoing is applicable as prior art related to the disclosure.

### [Disclosure of Invention]

### [Solution to Problem]

An electronic device according to various embodiments herein may include a display and at least one processor. The at least one processor may be configured to identify a type of original image. The at least one processor may be configured to identify information about a main object included in the original image and information about a background area, based on the identified type of the original image. The at least one processor may be configured to regenerate the original image into an image corresponding to a size of the display by generating a surrounding area of the original image, based on the information about the main object and the information about the background area. The at least one processor may be configured to control the display to display the regenerated image.

An image regeneration method according to various embodiments herein may identify a type of original image. The method may identify information about a main object included in the original image and information about a background area, based on the identified type of the original image. The method may regenerate the original image into an image corresponding to a size of the display by generating a surrounding area of the original image based on the information about the main object and the information about the background area. The method may display the regenerated image.

A non-transitory computer-readable storage medium recording a program for performing an image regeneration method, according to various embodiments herein, enables execution of an operation of identifying a type of original image. The storage medium enables execution of an operation of identifying information about a main object included in the original image and information about a background area, based on the identified type of the original image. The storage medium enables execution of an operation of regenerating the original image into an image corresponding to a size of the display by generating a surrounding area of the original image based on the information about the main object and the information about the background area. The storage medium can perform an operation to display the regenerated image.

### [Brief Description of Drawings]

FIG. 1 is a block diagram of an electronic device in a network environment according to various embodiments;
FIG. 2 is a block diagram illustrating the configuration of an electronic device according to various embodiments;
FIGS. 3, 4, and 5 are flowcharts illustrating processes of regenerating an image according to various embodiments;
FIGS. 6A, 6B, 6C, and 6D illustrate the process of regenerating a portrait image according to various embodiments;
FIGS. 7A, 7B, and 7C illustrate the process of regenerating an animal image according to various embodiments;
FIGS. 8A, 8B, and 8C illustrate the process of regenerating a landscape image according to various embodiments;
FIGS. 9A and 9B illustrate the process of regenerating a graphic image according to various embodiments;
FIGS. 10A, 10B, 10C, 10D, and 10E illustrate regenerated images according to various embodiments;
FIG. 11 illustrates an image regeneration system according to various embodiments;
FIG. 12 is a block diagram illustrating the configuration of an external device according to various embodiments;
FIG. 13 is a timing diagram illustrating an image regeneration system according to various embodiments;
FIG. 14 illustrates regenerated images displayed on various displays according to various embodiments;
FIGS. 15A and 15B illustrate images that change in response to the surrounding environment according to various embodiments; and
FIG. 16 is a flowchart illustrating an image regeneration method according to various embodiments.

### [Mode for the Invention]

Hereinafter, various embodiments herein will be described with reference to the accompanying drawings.

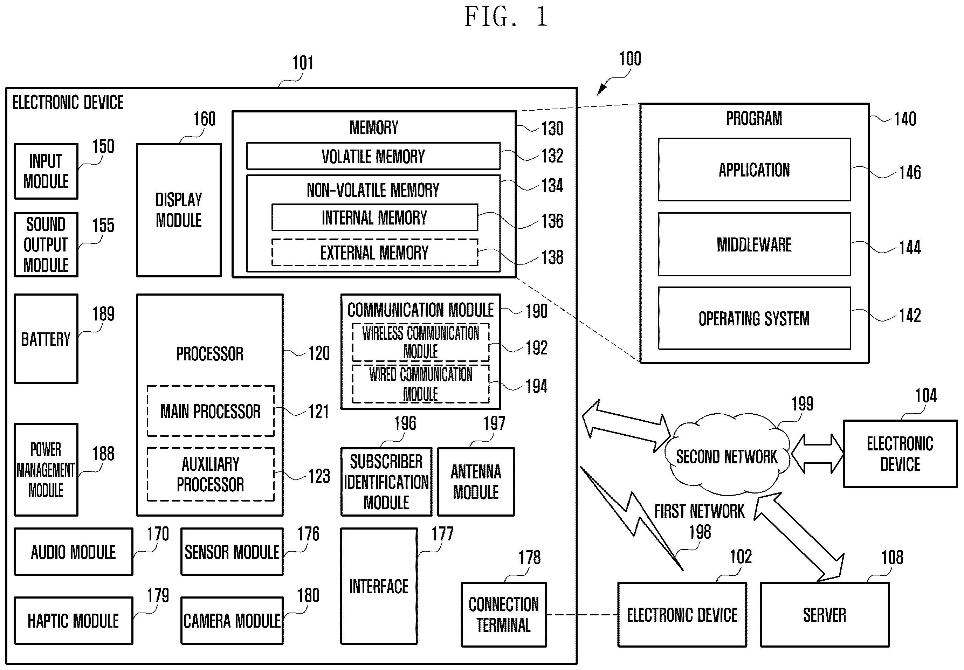

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

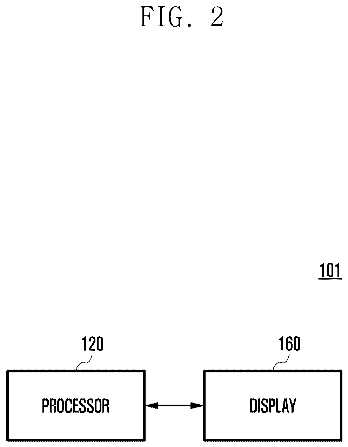

FIG. 2 is a block diagram illustrating the configuration of an electronic device according to various embodiments.

Referring to FIG. 2, an electronic device 101 may include a processor 120 (e.g., the processor 120 in FIG. 1) and a display 160 (e.g., the display module 160 in FIG. 1).

The processor 120 may control each component of the electronic device 101. The electronic device 101 may include at least one processor 120. The processor 120 may identify the type of original image. For example, the processor 120 may identify a portrait image, an animal image, a landscape image, or a graphic image. Based on the identified type of the original image, the processor 120 may identify a main object and a background area included in the original image. The background area may be an area other than the main object area in the image. For example, when an image is an image containing a person, the person may be a main object. When the image is an image containing an animal, the animal may be a main object. When an image is a landscape image, the largest object (e.g., a tree or a building) may be a main object. When an image is a graphic image, a shape and/or a pattern may be determined to be a main object.

Furthermore, the processor 120 may analyze the main object based on the type of image. For example, when the original image is a portrait image, an object image, and/or an animal image, the processor 120 may determine the shape of a main object. When the shape of the main object included in the original image is a full shape (or a complete shape, including a full body), the processor 120 may generate a surrounding area of the original image around the main object. Alternatively, when the shape of the main object is not a full shape (e.g., a face, the upper body, a part, etc.), the processor 120 may configure the cropped surface of the main object as a reference axis and generate the surrounding area of the original image excluding the reference axis. When the main object is not in a full shape, the main object may be adjacent to at least one of edges of the original image. The processor 120 may configured the edge of the original image to which the main object is adjacent as a reference axis. For example, when the original image is an upper-body image of a person, the person's body may be adjacent to the bottom edge of the original image. In this case, the processor 120 may configure the bottom edge of the original image as a reference axis and generate areas in the directions of the left and right edges and the top edge.

For example, when the original image is a landscape image, the processor 120 may determine whether the original image includes a main object. For example, the main object may be the largest object and/or the most in-focus object in the original image. In a landscape image, the main object may be an object.

For example, when the original image is a graphic image, the processor 120 may analyze graphic attributes of the original image. In an embodiment, the graphic image may be an image that includes lines, shapes, and/or colors. The graphic attributes may include a figure's shape, size, color, brightness, saturation, line thickness, and/or line style. When the original image is a graphic image, the processor 120 may determine that an object included in the graphic image is a main object and that there is no background area.

The processor 120 may identify background area information. For example, the background area information may be attribute information, and the attribute information may include information about lines, colors, and patterns. The background area may include different objects (e.g., a cloud, a mountain, and a river). The different objects may be referred to as sub-objects. When the background area includes a sub-object, the processor 120 may identify an attribute of the sub-object. Alternatively, when the background area does not include sub-objects, the processor 120 may identify an attribute of the background area, based on the color of the background area. In one example, the background area may include a mountain. The mountain may be a sub-object. The processor 120 may identify a ridge of the mountain, a color of the mountain, or a pattern on the mountain caused by a forest as attributes of the sub-object. Alternatively, the background area may be the sky. Since the sky has no specific shape, the processor 120 may determine that there is no sub-object. Therefore, the processor 120 may identify the color of the sky as an attribute of the background area. The processor 120 may identify the attribute of the sub-object and/or the attribute of the background as the background area information.

The processor 120 may regenerate the original image into an image corresponding to the size of the display 160 by generating a surrounding area of the original image based on the main object and the identified background area. The size of the original image may not match the size of the display 160 to be displayed. For example, the original image may have a size of 768 (width)*1024 (height) pixels, and the display 160 may display 1080 (width) * 1920 (height) pixels. Thus, when the original image is displayed on the display 160, an area of 312 pixels in width and 896 pixels in height may be lacking. The processor 120 may regenerate a background area based on an attribute of the identified background area, and may regenerate an image by filling the lacking area of the original image with the regenerated background area.

For example, the original image may be a portrait image, an object image, and/or an animal image. In this case, when a main object has a full shape and a background area includes a sub-object, the processor 120 may generate a surrounding area around the main object, based on an attribute of the sub-object. When a main object has a full shape and a background area does not include a sub-object, the processor 120 may generate a surrounding area around the main object, based on an attribute of the background area. In an embodiment, based on attributes of a background area and/or a sub-object at each edge of the original image, the processor 120 may generate a surrounding area of the original image in the direction of the corresponding edge.

When a main object is not in a full shape and a background area includes a sub-object, the processor 120 may configure a reference axis and generate a surrounding area other than the configured reference axis area, based on an attribute of the sub-object. When a main object is not in a full shape and a background area does not include a sub-object, the processor 120 may configure a reference axis and generate a surrounding area other than the configured reference axis area, based on an attribute of the background area. In an embodiment, when an edge of the main object is adjacent to an edge of the original image, the processor 120 may identify the edge of the original image adjacent to the main object as a reference axis. The processor 120 may regenerate an image by generating a surrounding area of the original image in the directions of edges other than the identified reference axis, and filling the background area in the directions of the edges of the original image, other than the reference axis.

For example, the original image may be a landscape image. When the original image includes a main object and the background area includes a sub-object, the processor 120 may generate a surrounding area about the main object, based on an attribute of the sub-object. When the original image includes a main object and the background area does not include a sub-object, the processor 120 may generate a surrounding area around the main object based on an attribute of the background area. When the original image does not include a main object and the background area includes a sub-object, the processor 120 may generate a surrounding area based on an attribute of the sub-object for the entire area of the original image. When the original image does not include a main object and the background area does not include a sub-object, the processor 120 may generate a surrounding area, based on the attribute of the background area, for the entire area of the original image.

For example, the original image may be a graphic image. In this case, the processor 120 may generate a similar pattern based on analyzed graphic attributes. The similar pattern may be a pattern generated by combining the analyzed graphic attributes. The processor 120 may regenerate an image based on the generated similar pattern. The regenerated image may be an image corresponding to the size of a display that is different from the size of the original image. Thus, the processor 120 may regenerate, based on the graphic image, an image corresponding to the size of the display.

The processor 120 may display the regenerated image on the display 160. When the regenerated image and at least one object are displayed together, the processor 120 may change the position and/or size of the main area, based on the position of the at least one object and the position of the main area. Alternatively, when at least one object is transformed or a new object is displayed after the regenerated image is displayed, the processor 120 may change at least one of the position and size of the main area such that the at least one transformed object and/or the new object does not interfere with the main area. The processor 120 may transform a previously regenerated image to change the position and/or size of the main area, and may regenerate a new image. Alternatively, the processor 120 may blur an area of the regenerated image in which at least one object is to be displayed. For example, the at least one object may include an icon, a widget, a notification, a button, text, an image, and/or a pop-up window.

Furthermore, the processor 120 may transform and/or apply an effect to the regenerated image, based on information about a surrounding environment. For example, the processor 120 may transform and/or apply an effect to the regenerated image to correspond to at least one of weather, season, and/or time. In one example, when it is currently sunny, the processor 120 may display a general regenerated image on the display 160. When it is currently rainy, the processor 120 may transform the regenerated image into a rainy background and/or apply a rainy effect. When the current time of day is night, the processor 120 may transform the regenerated image into a nighttime background or apply a nighttime recognizable effect. When the current season is winter, the processor 120 may remove leaves contained in the regenerated image, transform the regenerated image into a snowy background, or apply an effect related to winter. The electronic device 101 may detect the temperature by using a sensor (e.g., the sensor module 176 in FIG. 1). Alternatively, the electronic device 101 may receive time, position, and/or date information from an external device by using a communication module (e.g., the communication module 190 in FIG. 1), and determine weather, season, and/or time, based on the received information.

The processor 120 may regenerate a selected image, based on an image selected by a user and the size of the display 120. In this case, the processor 120 may recommend images related to the image selected by the user. For example, the processor 120 may recommend images related to a person, a capture time, and a capture location in the selected image. Among the related images, the processor 120 may identify the priority of the related images, based on an image tilt, image brightness, a sharpness of a main object, a percentage of a margin in an image, and/or a brightness of the margin. The processor 120 may then recommend a predetermined number of related images, based on the identified priority. The user may finally select one image from the selected image and the recommended images. The processor 120 may then regenerate an image corresponding to the size of the display 160, based on the finally selected image.

The processor 120 may use an image-generative artificial intelligence model to perform the process of image analysis, image regeneration, and/or image recommendation. For example, the image-generative artificial intelligence model may include multiple neural network layers. The multiple neural network layers may each have multiple weight values, and a neural network computation may be performed through computation between the computation result of a previous layer and the multiple weights. The multiple weights may be optimized by the result of training the image-generative artificial intelligence model. The image-generative artificial intelligence model may be trained with multiple images as input. For example, the multiple neural networks may include neural networks such as a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, or a generative adversarial network (GAN).

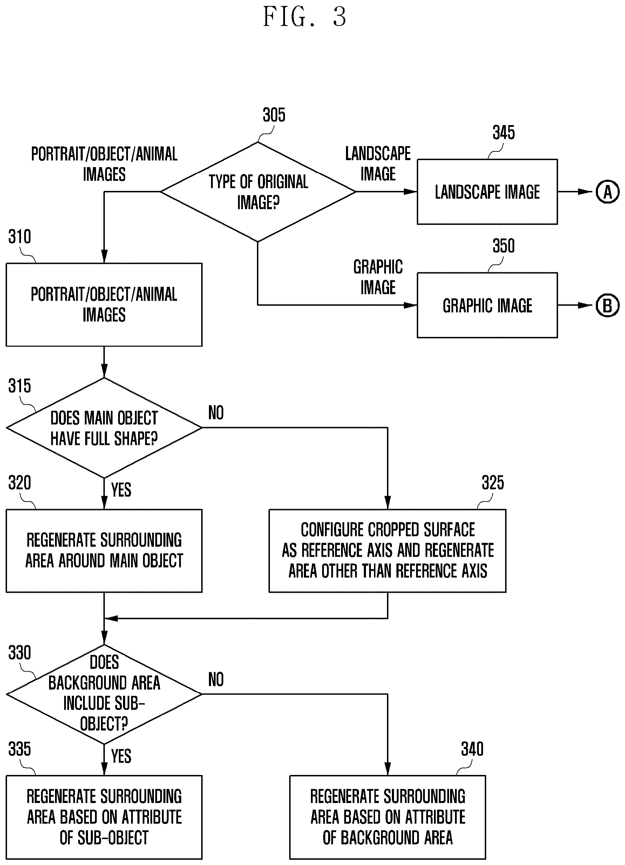

FIGS. 3, 4, and 5 are flowcharts illustrating processes of regenerating an image according to various embodiments.

In the following embodiments, operations may be performed sequentially, but are not necessarily performed sequentially. For example, the order of the operations may be changed, and at least two actions may be performed in parallel.

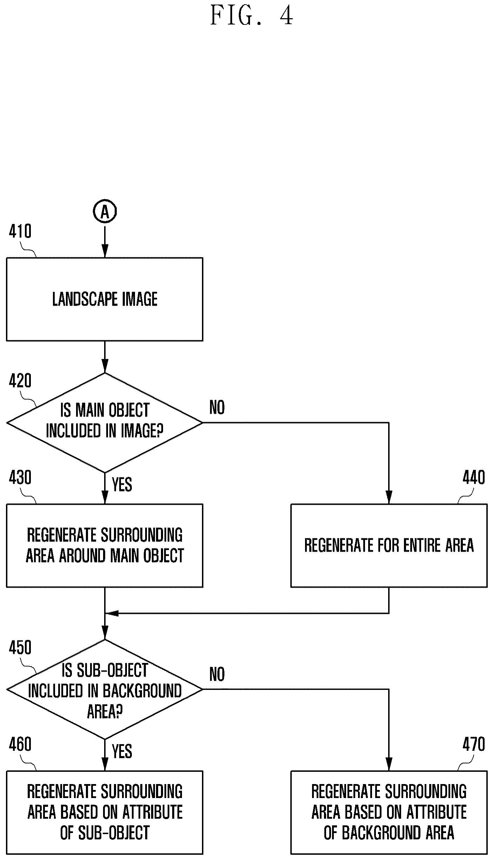

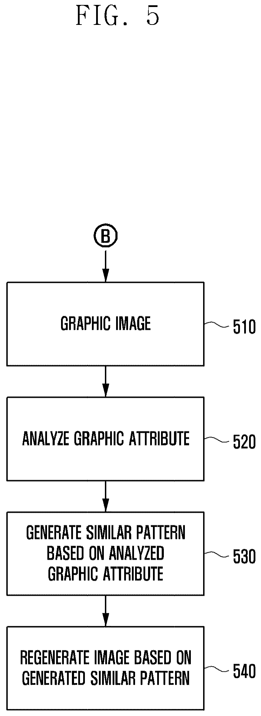

According to an embodiment, it can be understood that 305 to 340 in FIG. 3, 410 to 470 in FIG. 4, and 510 to 540 in FIG. 5 are performed by a processor (e.g., the processor 120 in FIG. 2) of an electronic device (e.g., the electronic device 101 in FIG. 2).

Referring to FIG. 3, the electronic device 101 may determine the type of original image (305). For example, the type of the original image may include a portrait image, an object image, an animal image, a landscape image, and/or a graphic image. In one example, when the electronic device 101 determines that the original image is a portrait image, an object image, or an animal image (310), the electronic device 101 may identify a main object in the original image. For example, the main object may be the largest object and/or the most in-focus object in the original image. In a portrait image, the main object may be a person. In an object image, the main object may be an object. In an animal image, the main object may be an animal.

If the original image includes a person, an object, an animal, a landscape, and/or a graphic together, the electronic device 101 may determine the type of the original image, based on predetermined criteria. For example, the electronic device 101 may determine the type of the original image, based on a predetermined priority. The predetermined priority may be configured in the order of a person (or, an object, an animal), a landscape, and a graphic. Alternatively, the electronic device 101 may determine the original image based on the size of a main object. When the area of a person (or, an object, or an animal) is the largest in the original image, the electronic device 101 may determine that the type of the original image is a person (or, object, or animal) image. When the area of a landscape is the largest in the original image, the electronic device 101 may determine that the type of the original image is a landscape image. When the area of a graphic is the largest in the original image, the electronic device 101 may determine that the type of the original image is a graphic image. Alternatively, the electronic device 101 may determine the type of the original image, based on a focused object (or, the sharpness of the object). Alternatively, the electronic device 101 may determine the type of the original image, based on a user selection.

The electronic device 101 may determine the shape of the main object. The electronic device 101 may determine (315) whether the shape of the main object included in the original image is a full shape (or a complete shape, including a full body). When the main object is in a full shape (315-Y), the electronic device 101 may generate a surrounding area of the original image around the main object (320). Alternatively, when the shape of the main object included in the original image is not a full shape (315-N) (e.g., a face, the upper body, a part, etc.), the electronic device 101 may configure a cropped side of the main object as a reference axis and generate a surrounding area, other than outside of the reference axis, in the original image (325). When the main object does not have a full shape, the main object may be adjacent to at least one of edges of the original image. The electronic device 101 may configure the edge of the original image, to which the main object is adjacent, as the reference axis. For example, when the original image is an image of a person's upper body, the person's body may be adjacent to the bottom edge of the original image. In this case, the electronic device 101 may configure the bottom edge of the original image as a reference axis and generate areas in the directions of the left and right edges and the top edge.

The electronic device 101 may determine whether a background area includes a sub-object. The sub-object may be an object around the main object, excluding the main object, in the original image. For example, the sub-object may be an object such as a tree, a building, a tile, or a mountain. When the background area includes a sub-object (330-Y), in operation 335, the electronic device 101 may generate a surrounding area of the original image, based on an attribute of the sub-object. Alternatively, when the background area does not include a sub-object (330-N), in operation 340, the electronic device 101 may generate a surrounding area of the original image, based on an attribute of the background area. For example, the attribute of the sub-object and the attribute of the background area may include a line, a color, and/or a pattern.

In other words, the original image may be a portrait image, an object image, and/or an animal image. In this case, when a main object has a full shape and a background area includes a sub-object, the electronic device 101 may generate a surrounding area around the main object, based on an attribute of the sub-object. When a main object has a full shape and a background area does not include a sub-object, the electronic device 101 may generate a surrounding area around the main object, based on an attribute of the background area. When a main object does not have a full shape and a background area includes a sub-object, the electronic device 101 may configure a reference axis and generate a surrounding area other than the configured reference axis area, based on an attribute of the sub-object. When a main object does not have a full shape and a background area does not include a sub-object, the electronic device 101 may configure a reference axis and generate a surrounding area, other than the configured reference axis area, based on an attribute of the background area.

When the electronic device 101 determines that the original image is a landscape image (345), the electronic device 101 may perform an operation of processing the landscape image (345-a). When the electronic device 101 determines that the original image is a graphic image (350), the electronic device 101 may perform an operation of processing the graphic image (350-b).

Referring to FIG. 4, the electronic device 101 may determine the type of the original image (a), and may determine that the original image is a landscape image (410). When the electronic device 101 determines that the original image is a landscape image, the electronic device 101 may determine whether the original image includes a main object (420). For example, the main object may be the largest object and/or the most in-focus object in the original image. In a landscape image, the main object may be an object.

When the original image includes a main object (420-Y), the electronic device 101 may generate a surrounding area of the original image around the main object (430). When the original image does not include a main object (420-N), the electronic device 101 may generate a surrounding area of the original image for the entire area (440).

The electronic device 101 may determine (450) whether a background area includes a sub-object. The sub-object may be an object around the main object, excluding the main object, in the original image. For example, the sub-object may be an object such as a tree, a building, a cloud, or a mountain. When the background area includes a sub-object (450-Y), the electronic device 101 may generate a surrounding area of the original image, based on an attribute of the sub-object (460). Alternatively, when the background area does not include a sub-object (450-N), the electronic device 101 may generate a surrounding area of the original image, based on an attribute of the background area (470). For example, the attribute of the sub-object and the attribute of the background area may include a line, a color, and/or a pattern.

In other words, the original image may be a landscape image. In this case, when the original image includes a main object and the background area includes a sub-object, the electronic device 101 may generate a surrounding area around the main object, based on an attribute of the sub-object. When the original image includes a main object and the background area does not include a sub-object, the electronic device 101 may generate a surrounding area around the main object, based on an attribute of the background area. When the original image does not include a main object and the background area includes a sub-object, the electronic device 101 may generate a surrounding area, based on an attribute of the sub-object, for the entire area of the original image. When the original image does not include a main object and the background area does not include a sub-object, the electronic device 101 may generate a surrounding area, based on an attribute of the background area, for the entire area of the original image.

Referring to FIG. 5, the electronic device 101 may determine the type of the original image (b) and determine that the original image is a graphic image (510). For example, the graphic image may be an image that includes a line, a figure, and/or a color. When the electronic device 101 determines that the original image is a graphic image, the electronic device 101 may analyze graphic attributes of the original image (520). For example, the graphic attributes may include a figure's shape, size, color, brightness, saturation, line thickness, and/or line style. When the original image is a graphic image, the electronic device 101 may determine that an object included in the graphic image is a main object and that there is no background area.

The electronic device 101 may generate a similar pattern, based on the analyzed graphic attributes (530). For example, the similar pattern may be a pattern generated by a combination of the analyzed graphic attributes. The electronic device 101 may regenerate an image, based on the generated similar pattern. The regenerated image may be an image corresponding to the size of a display that is different from the size of the original image. Thus, the electronic device 101 may regenerate an image corresponding to the size of the display, based on the graphic image.

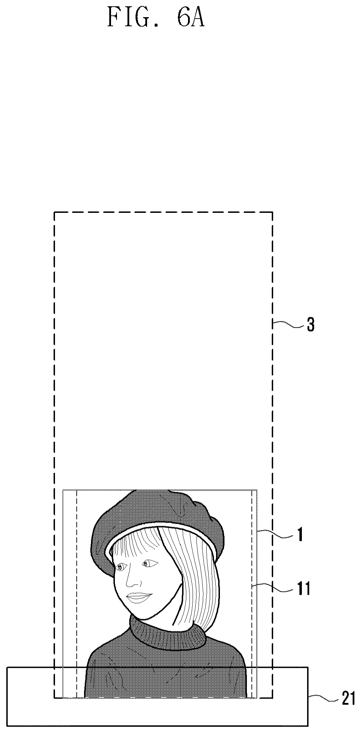

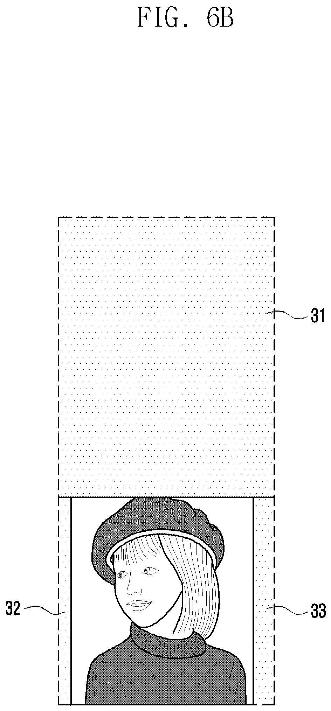

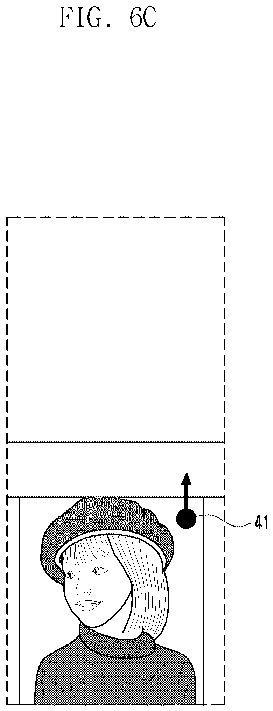

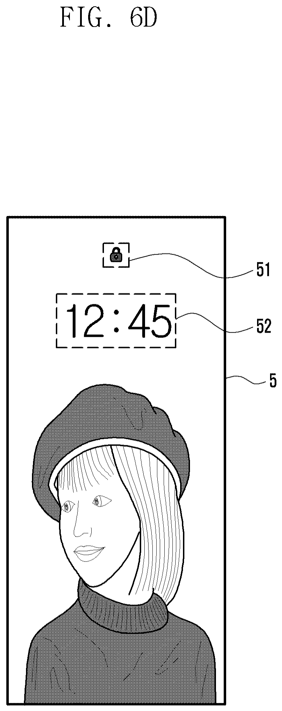

FIGS. 6A, 6B, 6C, and 6D illustrate the process of regenerating a portrait image according to various embodiments. FIG. 6A illustrates an original image 1, FIG. 6B illustrates surrounding areas, FIG. 6C illustrates the extension of the surrounding areas, and FIG. 6D illustrates a regenerated image.

Referring to FIG. 6A, the electronic device 101 may identify the type of an original image 1. For example, the original image 1 may be a portrait image. The electronic device 101 may identify a main object and/or a main area 11 in the original image 1. In a portrait image, a person may be a main object and an area including the main object may be the main area 11. The electronic device 101 may identify the shape of the main object. For example, the shape of the main object may include a full shape (e.g., a full body image) or a partial shape (e.g., an upper body image). When the main object has a full shape, the electronic device 101 may generate surrounding areas of the original image 1 around the main object. When the main object has a partial shape, the electronic device 101 may configure, as a reference axis 21, an edge at which the main object is cropped (or an edge at which the main object is adjacent to an edge of the original image). Then, the electronic device 101 may generate the surrounding areas of the original image 1 in the directions of the remaining edges other than the edge of the reference axis 21.

For example, as illustrated in FIG. 6A, a person, which is a main object, may be adjacent the bottom of the original image 1. The electronic device 101 may identify the bottom of the original image 1 as the reference axis 21.

In one example, as illustrated in FIG. 6B, the electronic device 101 may position the bottom area of the original image 1 to be adjacent to the bottom area of the display 160 to be displayed, and generate an upper area 31, a left area 32, and a right area 33, based on an attribute of an identified background area.

The electronic device 101 may identify a background area. The background area may be an area other than the main area. The size of the original image 1 may be different from the size of the display 3. For example, the original image 1 may be smaller than the size of the display 3. Accordingly, the electronic device 101 may regenerate a background area of the original image 1 and generate an expanded image of the original image 1, based on the regenerated background area. The expanded image of the original image 1 may be referred to as an image regenerated from the original image 1.

The electronic device 101 may regenerate the background area of the original image 1 and thus identify information about the background area of the original image 1. For example, the information about the background area may include the presence or absence of a sub-object, an attribute of the background area, and/or an attribute of the sub-object. The attribute of the background area and/or the attribute of the sub-object may include a line, a color, and/or a pattern. Based on the identified information about the background area, the electronic device 101 may regenerate a background area and generate a surrounding area of the original image 1. The electronic device 101 may generate the surrounding area of the original image, based on the information about the background area, in the directions of edges other than the identified reference axis 21. The electronic device 101 may identify information about a background area at each edge of the original image 1. Then, the electronic device 101 may regenerate a corresponding background area of the edge and generate the surrounding area of the original image 1. The electronic device 101 may identify whether the original image 1 includes a sub-object. When the original image 1 does not include a sub-object, information about a background area may be an attribute of the background area.

For example, as illustrated in FIG. 6C, the electronic device 101 may identify an attribute of an upper background area 41 of the original image 1, and may regenerate a background area, based on the identified attribute of the upper background area 41. Then, the electronic device 101 may fill the corresponding area 31 on top of the original image 1 with the regenerated background area. Similarly, the electronic device 101 may identify an attribute of the left background area of the original image 1 and regenerate a background area, based on the identified attribute of the left background area. Then, the electronic device 101 may fill the corresponding area 32 at the left side of the original image 1 with the regenerated background area. Furthermore, the electronic device 101 may identify an attribute of a right background area of the original image 1, and may regenerate a background area, based on the identified attribute of the right background area. Then, the electronic device 101 may fill the corresponding area 33 at the right side of the original image 1 with the regenerated background area. The electronic device 101 may identify the size of the display 160, and may regenerate the image to correspond to the identified size of the display 160.

As illustrated in FIG. 6D, the electronic device 101 may display a regenerated image 5 on the display 160. The electronic device 101 may display at least one object 51 or 52 along with the regenerated image 5. For example, the at least one object may include an icon, a widget, a notification, a button, text, an image, and/or a pop-up window.

Since the image 5 regenerated in the above-described manner is not a simple expansion of the original image 1, the resolution of the original image may be maintained. Furthermore, the surrounding areas of the regenerated image 5 has been generated based on the attributes of the corresponding surrounding areas of the original image 1, and thus may not feel out of place.

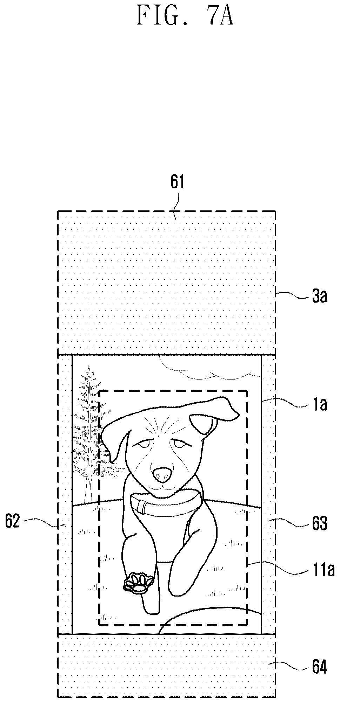

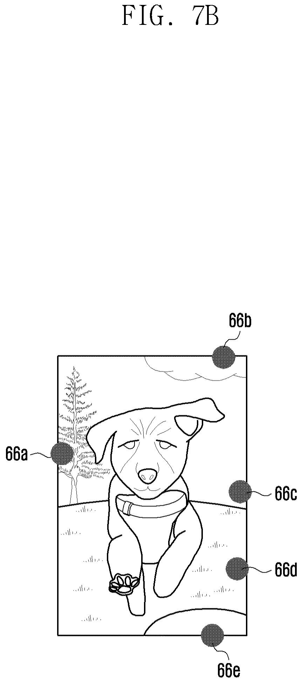

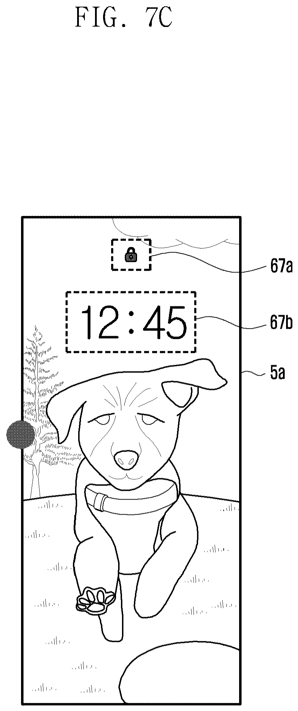

FIGS. 7A, 7B, and 7C illustrate the process of regenerating an animal image according to various embodiments. FIG. 7A illustrates an original image 1a, FIG. 7B illustrates surrounding areas, and FIG. 7C illustrates a regenerated image.

Referring to FIG. 7A, the electronic device 101 may identify the type of an original image 1a. For example, the original image 1a may be an animal image. The electronic device 101 may identify a main object and/or a main area 11a in the original image 1a. In an animal image, an animal may be a main object, and an area including the main object may be the main area 11a. The electronic device 101 may identify the shape of the main object. For example, the shape of the main object may include a full shape (e.g., a full body image) or a partial shape (e.g., an upper body image). When the main object has a full shape, the electronic device 101 may generate surrounding areas of the original image 1a around the main object. When the main object is a partial shape, the electronic device 101 may configure, as a reference axis, an edge at which the main object is cropped (or an edge at which the main object is adjacent to an edge of the original image). Then, the electronic device 101 may generate surrounding areas of the original image 1a in the directions of the remaining edges other than the edge of the reference axis.

For example, as illustrated in FIG. 7A, an animal, which is a main object, may have a full shape. The electronic device 101 may generate surrounding areas 61, 62, 63, and 64 of the original image 1a around the main object. The electronic device 101 may identify a background area. The background area may be an area other than the main area. The electronic device 101 may regenerate a background area of the original image 1a, and may regenerate an image by expanding the original image 1a based on the regenerated background area.

The electronic device 101 may identify information about the background area of the original image 1a. For example, the information about the background area may include the presence or absence of a sub-object, an attribute of the background area, and/or an attribute of the sub-object. The attribute of the background area and/or the attribute of the sub-object may include a line, a color, and/or a pattern. The electronic device 101 may regenerate a background area based on the identified information about the background area and generate surrounding areas of the original image 1a.

For example, the original image 1a illustrated in FIG. 7B may include sub-objects of a tree 66a, a cloud 66b, grass 66d, and a toy 66e. The electronic device 101 may identify the presence or absence of a sub-object. When a sub-object is identified, the electronic device 101 may identify an attribute of the sub-object. In an embodiment, the electronic device 101 may identify the tree 66a located on the left of the original image 1a, and may identify an attribute of the identified tree 66a. Based on the identified attribute of the tree 66a, the electronic device 101 may fill the corresponding area 62 at the left side of the original image 1a with a regenerated background area. Similarly, the electronic device 101 may identify the cloud 66b located on the upper side of the original image 1a and identify an attribute of the identified cloud 66b. Based on the identified attribute of the cloud 66b, the electronic device 101 may fill the corresponding area 61 on top of the original image 1a with a regenerated background area. The electronic device 101 may identify the grass 66d located on the right side of the original image 1a, and may identify an attribute of the grass 66d. Based on the attribute of the grass 66d area, the electronic device 101 may fill the corresponding area 63 at the right side of original image 1a with a regenerated background area. Furthermore, the electronic device 101 may identify a background area 66c (an area without sub-objects) located on the right side of the original image 1a, and may identify an attribute of the background area 66c. Based on the attribute of the background area 66c, the electronic device 101 may fill the corresponding area 63 at the right side of the original image 1a with a regenerated background area. The electronic device 101 may identify the toy 66e located at the bottom of the original image 1a, and may identify an attribute of the toy 66e. Based on the identified attribute of the toy 66e area, the electronic device 101 may fill the corresponding area 64 beneath the original image 1a with a regenerated background area. In other words, the original image 1a illustrated in FIG. 7B includes the full shape of the animal. Therefore, the electronic device 101 may generate surrounding areas of the original image 1a around the main object (or, the main area 11a). For example, the electronic device 101 may generate the upper area 61, the left area 62, the right area 63, and the lower area 64, based on the attributes of the background areas at identified edges.

As illustrated in FIG. 7C, the electronic device 101 may identify the size of the display 160 and may regenerate the image to correspond to the identified size of the display 160. The electronic device 101 may display a regenerated image 5a on the display 160. The electronic device 101 may display at least one object (e.g., an icon, a widget, a notification, a button, text, an image, or a pop-up window) 67a or 67b along with the regenerated image 5a.

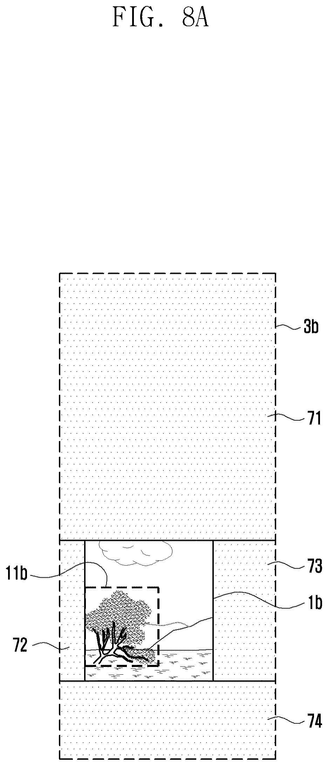

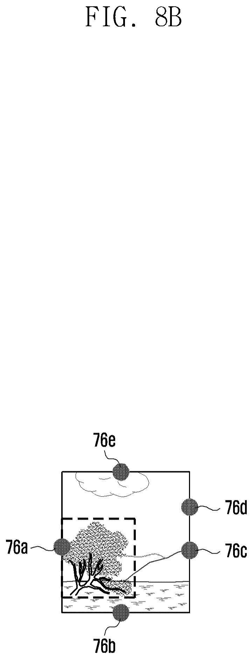

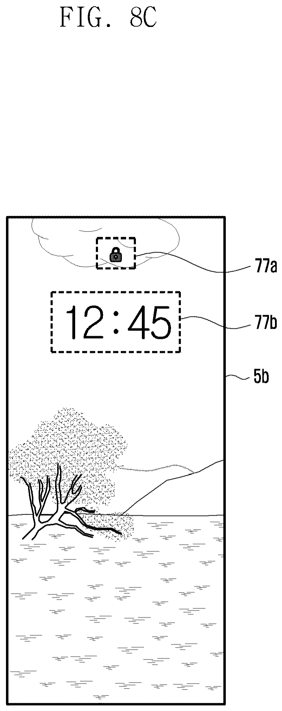

FIGS. 8A, 8B, and 8C illustrate the process of regenerating a landscape image according to various embodiments. FIG. 8A illustrates an original image 1b, FIG. 8B illustrates surrounding area, and FIG. 8C illustrates a regenerated image.

Referring to FIG. 8A, the electronic device 101 may identify the type of an original image 1b. For example, the original image 1b may be a landscape image. The electronic device 101 may identify the presence or absence of a main object in the original image 1b. In the case of a landscape image, the electronic device 101 may determine that the largest object and/or the most in-focus object is a main object. When the original image 1b includes a main object, the electronic device 101 may identify a main area 11b and generate surrounding areas of the original image 1b around on the main object. When the original image 1b does not include a main object, the electronic device 101 may generate a surrounding area for the entire area of the original image 1b.

The electronic device 101 may identify information about a background area of the original image 1b. For example, the information about the background area may include the presence or absence of a sub-object, an attribute of the background area, and/or an attribute of the sub-object. The attribute of the background area and/or the attribute of the sub-object may include a line, a color, and/or a pattern. The electronic device 101 may regenerate a background area based on the identified information about the background area and generate a surrounding area of the original image 1b.

For example, as illustrated in FIG. 8B, the original image 1b may include sub-objects of a tree 76a, a river 76b, a mountain 76c, and a cloud 76e. The electronic device 101 may identify the presence or absence of a sub-object. When a sub-object is identified, the electronic device 101 may identify an attribute of the sub-object. In an embodiment, the electronic device 101 may identify the tree 76a located on the left side of the original image 1b and identify an attribute of the identified tree 76a. Based on the identified attribute of the tree 76a area, the electronic device 101 may fill a corresponding area 72 at the left side of the original image 1b with a regenerated background area. Similarly, the electronic device 101 may identify a river 76b located at the bottom of the original image 1b and identify an attribute of the river 76b. Based on the identified attribute of the river 76b, the electronic device 101 may fill a corresponding area 74 beneath the original image 1b with a regenerated background area. The electronic device 101 may identify the mountain 76c located on the right side of the original image 1b, and may identify an attribute of the identified mountain 76c. Based on the attribute of the mountain 76c, the electronic device 101 may fill a corresponding area 73 at the right side of the original image 1b with a regenerated background area. Furthermore, the electronic device 101 may identify a background area 76d located on the right side of the original image 1b, and may identify an attribute of the identified background area 76d. Based on the attribute of the background area 76d, the electronic device 101 may fill a corresponding area 73 at the right side of the original image 1b with a regenerated background area. The electronic device 101 may identify the cloud 76e located on the upper side of the original image 1b, and may identify an attribute of the identified cloud 76e. Based on the identified attribute of the cloud 76e, the electronic device 101 may fill a corresponding area 71 on top of the original image 1b with a regenerated background area. The electronic device 101 may identify the size of the display 160, and may regenerate the image to correspond to the identified size of the display 160.

As illustrated in FIG. 8C, the electronic device 101 may display a regenerated image 5b on the display 160. The electronic device 101 may display at least one object (e.g., an icon, a widget, a notification, a button, text, an image, or a pop-up window) 77a or 77b along with the regenerated image 5b.

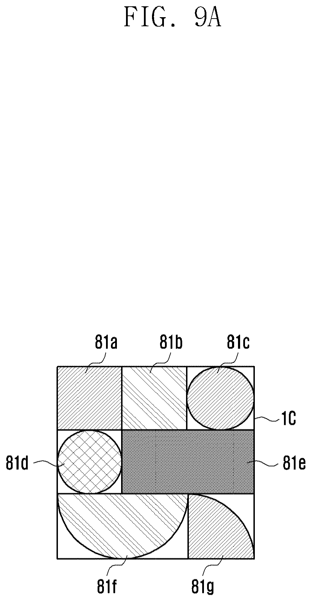

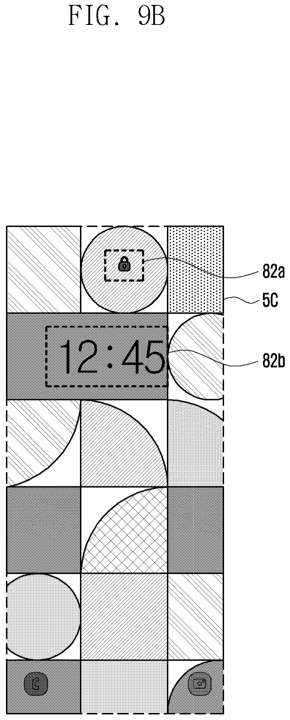

FIGS. 9A and 9B illustrate the process of regenerating a graphic image according to various embodiments. FIG. 9A illustrates an original image, and FIG. 9B illustrates a regenerated image.

Referring to FIG. 9A, the electronic device 101 may identify the type of an original image 1c. For example, the original image 1c may be a graphic image. The graphic image may include objects that include various lines, shapes, sizes, textures, colors, brightness, and/or saturation. In the case of a graphic image, the electronic device 101 may determine that an element (e.g., shape, line, or color) of a graphic is a main object. The electronic device 101 may identify attribute information of the graphic image. For example, the attribute information may include line, shape, size, texture, color, brightness, and/or saturation. The electronic device 101 may generate a pattern similar to a pattern in the original image 1c, based on the identified attribute information of the graphic image. For example, the electronic device 101 may generate a pattern similar to a pattern in the original image 1c based on a shape of a figure, a size of the figure, a style of a line, a thickness of the line, a color, and/or a pattern included in the graphic image. The electronic device 101 may regenerate the original image 1c based on the generated similar pattern.

For example, as illustrated in FIG. 9A, the original image 1c may be a graphic image including various figures 81a, 81b, 81c, 81d, 81e, 81f, and 81g. The electronic device 101 may identify an attribute of each of the figures 81a, 81b, 81c, 81d, 81d, 81e, 81f, and 81g. For example, the electronic device 101 may identify the shape, size, color, brightness, saturation, line thickness, line style, and pattern of each of the figures 81a, 81b, 81c, 81d, 81d, 81e, 81f, and 81g. The electronic device 101 may generate a pattern similar to the pattern in the original image 1c based on the identified attributes of the graphic image. For example, the electronic device 101 may generate various figures by combining attributes of each of the figures 81a, 81b, 81c, 81d, 81d, 81e, 81f, and 81g, and may also regenerate an image by combining the attributes of each of the figures 81a, 81b, 81c, 81d, 81d, 81e, 81f, and 81g and/or the various generated figures.

As illustrated in FIG. 9B, the electronic device 101 may display an image 5c which has been regenerated in a pattern similar to that of the original image 1c, and may display the regenerated image 5c with at least one object (e.g., an icon, a widget, a notification, a button, text, an image, or a pop-up window) 82a or 82b.

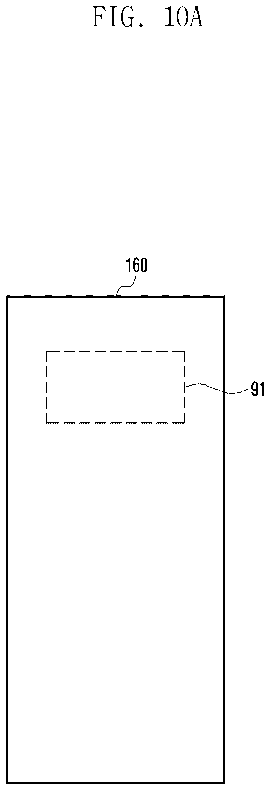

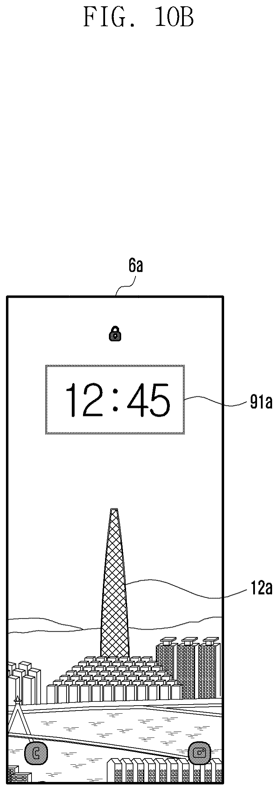

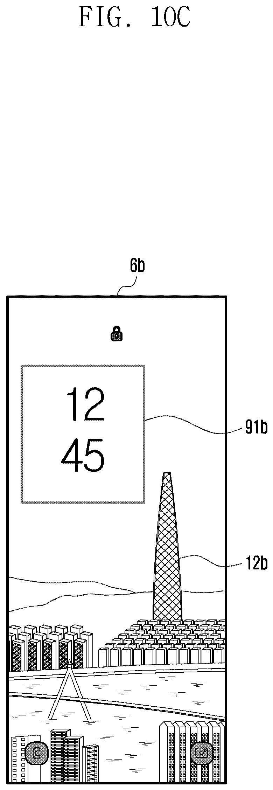

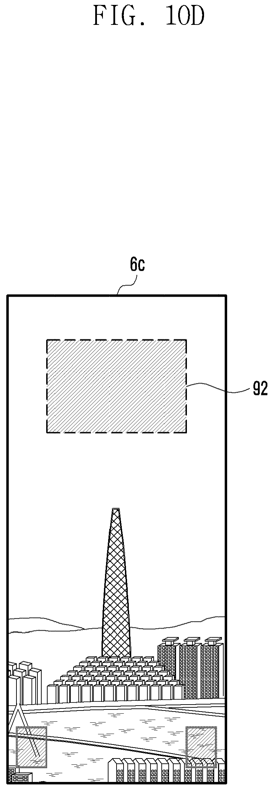

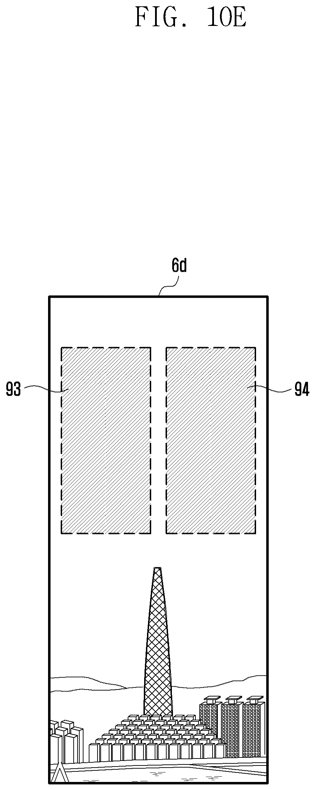

FIGS. 10A, 10B, 10C, 10D, and 10E illustrate regenerated images according to various embodiments.

Referring now to FIG. 10A, a display area in which a regenerated image is to be displayed is illustrated. At least one object may be displayed together in the display area. For example, the at least one object may include an icon, a widget, a notification, a button, text, an image, and a pop-up window. The electronic device 101 may identify a location 91 where the at least one object is to be displayed.

Referring to FIG. 10B, a regenerated image displayed with at least one object, according to an embodiment, is illustrated. For example, a clock widget 91a may be displayed on the display 160 along with a regenerated image 6a. A main object in the regenerated image 6a may be a building 12a. The electronic device 101 may regenerate an image in consideration of the position of the clock widget 91a. Thus, the building 12a and the clock widget 91a in the regenerated image 6a may not overlap. Alternatively, the electronic device 101 may change and display the position and/or size of the regenerated image 6a so that the regenerated image 6a does not interfere with at least one object.

Referring to FIG. 10C, when at least one object is transformed after a regenerated image is displayed, the electronic device 101 may change the position and/or size of a main area such that the at least one transformed object does not interfere with the main area.

For example, the size, shape, and/or position of the clock widget 91a illustrated in FIG. 10B may be changed based on user selection. For example, the clock widget 91a, which is rectangular in shape and located in the top center area, may be transformed to a square shape (and/or size) and repositioned to the top left area. The electronic device 101 may change a regenerated image 6b in consideration of the changed size, shape, and/or position of the clock widget 91a.

For example, the electronic device 101 may shift the position of the main object 12a to the right so that the main object 12a does not overlap the clock widget 91a. In this case, the electronic device 101 may additionally generate a required area and crop an unnecessary area. For example, the electronic device 101 may identify an attribute of the left background area of the regenerated image 6a, and regenerate a left background area. Based on the regenerated left background area, the electronic device 101 may generate a left area of the regenerated image 6a. Alternatively, the electronic device 101 may generate the bottom area of the regenerated image 6a in a similar manner. Furthermore, the electronic device 101 may crop a right area and/or an upper area which is unnecessary.

The electronic device 101 may change the existing displayed image 6a to the newly generated image 6b. A main object 12b of the newly generated image 6b may be shifted to the right, and the main object 12b may not overlap the clock widget 91b changed in size, shape, and/or position. In FIG. 10B, an example has been described in which the regenerated image changes in response to a change in size, shape, and/or position of the at least one object displayed. However, even when a new object is displayed, the electronic device 101 may change the regenerated image in a similar manner, based on the size, shape, and/or position of the new object.

Referring to FIGS. 10D and 10E, regenerated images 6c and 6d, which include locations 92, 93, and 94 where at least one object is to be displayed, are illustrated.

The at least one object may be displayed along with the regenerated image 6c or 6d, but may also be displayed when predetermined conditions are met. When a new object is displayed after the regenerated image 6c or 6d is displayed, the electronic device 101 may change the position and/or size of a main area such that the new object does not interfere with the main area. For example, when the at least one object is a notification and/or a pop-up window, the notification and/or pop-up window may be displayed when a message is received or at a predetermined time. The locations 92, 93, and 94 where the at least one object is to be displayed may be predetermined. The electronic device 101 may regenerate an image in consideration of the locations 92, 93, and 94 where the at least one object is to be displayed, such that the main area does not overlap with the locations 92, 93, 94 where the at least one object is to be displayed.

Alternatively, the electronic device 101 may blur areas of the regenerated images 6a, 6b, 6c, and 6d in which at least one object is displayed.

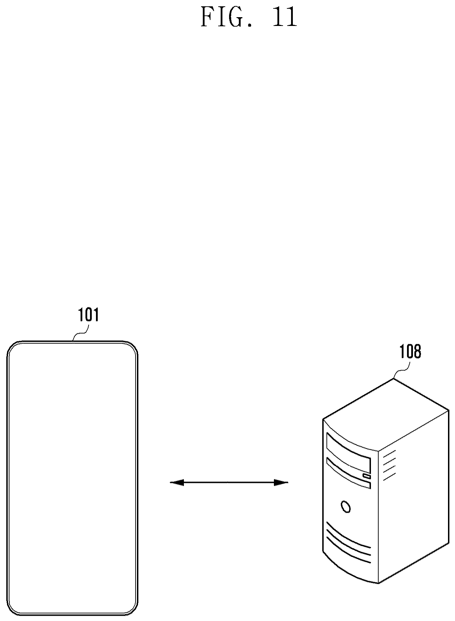

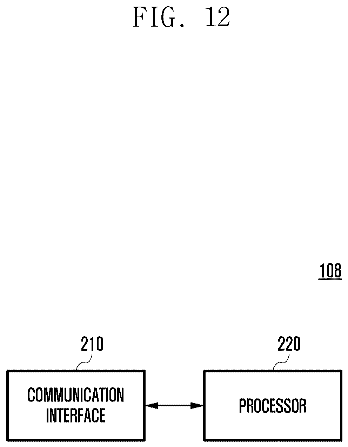

FIG. 11 illustrates an image regeneration system according to various embodiments, and FIG. 12 is a block diagram illustrating a configuration of an external device according to various embodiments. A description will be made with reference to both FIGS. 11 and 12.

As described above, the electronic device 101 alone may perform the process of regenerating an image from an original image 1. However, the electronic device 101 and an external device (e.g., the server 108 in FIG. 1) may jointly perform an image generation process. For example, the external device 108 may include a server, a cloud, and/or a host terminal device.

The image regeneration system may include the electronic device 101 and the external device 108. As illustrated in FIG. 2, the electronic device 101 may include a display 160 and a processor 120. In addition, the electronic device 101 may further include a communication interface. The external device 108 may include a communication interface 210 and a processor 220.

The communication interface (e.g., the communication module 190 in FIG. 1) of the electronic device 101 may transmit data related to image regeneration to the external device 108. For example, the communication interface of the electronic device 101 may transmit the original image 1 itself to the external device 108. Alternatively, the processor 120 of the electronic device 101 may analyze the original image 1 and obtain information about the original image 1. For example, the information about the original image 1 may include the type of the original image 1, the size of the original image 1, the type of object, the shape of the object, the placement of the object, the size of the object, the position of the object, an area related to image regeneration, vector information related to the original image 1, vector information related to the object, and/or a resource. The communication interface of the electronic device 101 may transmit information about the size of the display and/or the obtained information about the original image 1 to the external device 108 in order to protect privacy.

The communication interface 210 of the external device 108 may transmit and receive data to and from the electronic device 101. For example, the communication interface 210 may receive the original image 1 from the electronic device 101. Alternatively, the communication interface 210 may receive only necessary data from the electronic device 101. For example, the necessary data may include the information about the size of the display and/or the obtained information about the original image 1.

The processor 220 of the external device 108 may regenerate an image based on the received original image 1 or the information about the original image 1. The processor 220 may use an image-generative artificial intelligence model to perform the image regeneration process.

The processor 220 may identify the type of the original image 1. Alternatively, the information about the type of the original image 1 may be received from the electronic device 101. The processor 220 may identify a main object and a background area, based on the type of the original image 1. For example, the type of the original image 1 may include a portrait image, an object image, an animal image, a landscape image, or a graphic image.

When the original image 1 is a portrait image, an object image, and/or an animal image, the processor 220 may identify the shape of a main object. For example, the shape of the main object may include a full shape (e.g., a full body image) or a partial shape (e.g., an upper body image). When the shape of a main object is a full shape, the processor 220 may regenerate the original image 1 by generating surrounding areas of the original image 1 around the main object. Alternatively, when the shape of a main object is a partial shape, the processor 220 may identify an edge of the original image 1 adjacent to the main object as a reference axis. Then, the processor 220 may regenerate the original image 1 by generating surrounding areas of the original image 1 in the directions of edges other than the identified reference axis. As an embodiment, when a main object has a partial shape and is adjacent to the bottom of the original image 1, the processor 220 may generate surrounding areas in the top direction, the left direction, and the right direction except for the bottom direction.

When the original image 1 is a landscape image, the processor 220 may determine the presence or absence of a main object. For example, the main object may be the largest object and/or the most in-focus object in the original image 1. In a landscape image, the main object may be an object. When there is a main object in the landscape image, the processor 220 may regenerate the original image 1 by generating surrounding areas of the original image 1 around the main object. When there is no main object in the landscape image, the processor 220 may generate surrounding areas for the entire area of the original image 1. For example, the processor 220 may regenerate the original image 1 by generating surrounding areas of the original image 1 in the directions of all edges of the original image 1.

When the original image 1 is a graphic image, the processor 220 may identify attribute information of a graphic, and may regenerate the original image based on the identified attribute information. For example, the attribute information of the graphic may include a figure's shape, size, color, brightness, saturation, line thickness, and/or line style. When the original image is a graphic image, the electronic device 101 may determine that an object included in the graphic image is a main object and that there is no background area. The processor 220 may generate a pattern similar to a pattern in the original image 1, based on the identified attribute information, and may regenerate the original image based on the generated similar pattern.

The processor 220 may identify information about a background area. For example, the information about the background area may include an attribute of a sub-object and/or an attribute of the background area. The attribute of the sub-object and/or the attribute of the background area may include a line, a color, and/or a pattern.

When the type of the original image 1 is a portrait image, an object image, an animal image, or a landscape image, the processor 220 may determine the presence or absence of a sub-object. The processor 220 may identify an attribute of a background area. Furthermore, when a sub-object is present, the processor 220 may identify an attribute of the sub-object. The processor 220 may generate surrounding areas of the original image, based on the information about the identified background area, thereby regenerating the original image 1 into an image that matches the size of the display 160.

For example, the original image 1 may be a portrait image, an object image, and/or an animal image. In this case, when a main object has a full shape and a background area includes a sub-object, the processor 220 may generate a surrounding area around the main object, based on an attribute of the sub-object. When a main object has a full shape and a background area does not include a sub-object, the processor 220 may generate a surrounding area around the main object, based on an attribute of the background area. When a main object does not have a full shape and a background area includes a sub-object, the processor 220 may configure a reference axis and generate surrounding areas other than the configured reference axis area, based on an attribute of the sub-objects. When a main object does not have a full shape and a background area does not include a sub-object, the processor 220 may configure a reference axis and generate surrounding areas other than the configured reference axis area, based on an attribute of the background area.

For example, the original image 1 may be a landscape image. In this case, when the original image 1 includes a main object and a background area includes a sub-object, the processor 220 may generate a surrounding area around the main object, based on an attribute of the sub-object. When the original image includes a main object and a background area does not include a sub-object, the processor 220 may generate a surrounding area around the main object, based on an attribute of the background area. When the original image does not include a main object and a background area includes a sub-object, the processor 220 may generate a surrounding area, based on an attribute of the sub-object, for the entire area of the original image. When the original image does not include a main object and a background area does not include a sub-object, the processor 220 may generate a surrounding area, based on an attribute of the background area, for the entire area of the original image.

For example, the original image 1 may be a graphic image. In this case, the processor 220 may generate a pattern similar to a pattern in the original image 1, based on the identified attribute information, and may regenerate the original image, based on the generated similar pattern.

The processor 220 may transmit the regenerated image itself to the electronic device 101 via the communication interface 210. Alternatively, the processor 220 may transmit data for image regeneration via the communication interface 210. For example, the data for image regeneration may include the size of the regenerated image, the placement of an object, the position of the object, an area related to the regeneration, the position of a regenerated area, the size of the regenerated area, vector information related to the regenerated image, vector information related the object, and/or a resource.

The communication interface of the electronic device 101 may receive the regenerated image or the data for image regeneration from the external device 108. When the communication interface receives the regenerated image from the external device 108, the processor 120 of the electronic device 101 may display the received image on the display 160. Alternatively, when the communication interface receives the data for image regeneration from the external device 108, the processor 120 of the electronic device 101 may regenerate an image, based on the received data and display the regenerated image on the display 160.

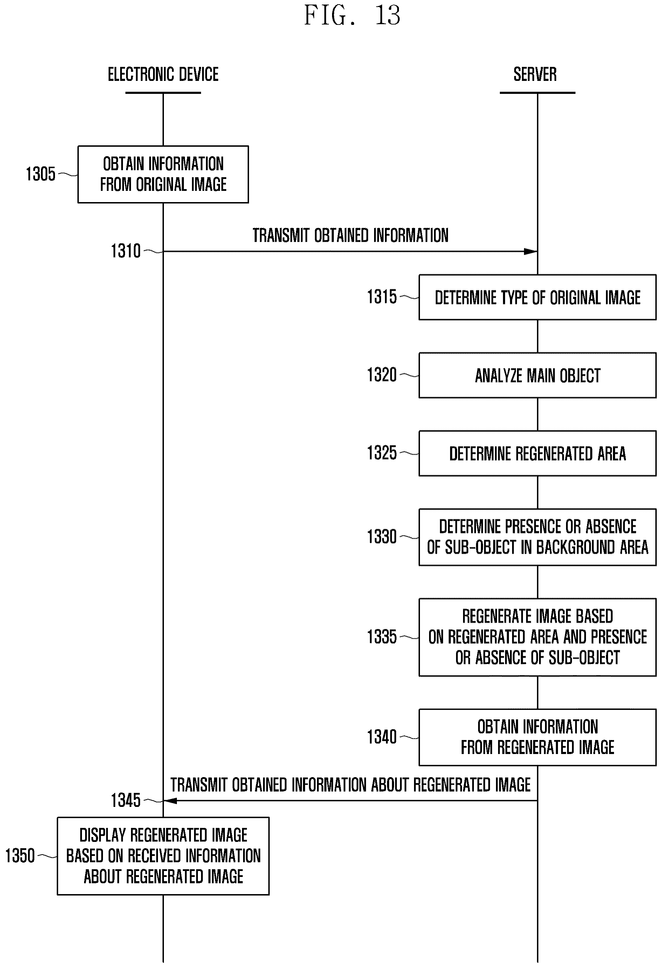

FIG. 13 is a timing diagram illustrating an image regeneration system according to various embodiments.

In the following embodiments, operations may be performed sequentially, but are not necessarily performed sequentially. For example, the order of the operations may be changed, and at least two operations may be performed in parallel.

According to an embodiment, 1305, 1310, and 1350 may be understood to be performed by a processor (e.g., the processor 120 in FIG. 2) of an electronic device (e.g., the electronic device 101 in FIG. 2). Furthermore, 1315 to 1345 may be understood to be performed by a processor (e.g., the processor 220 in FIG. 12) of an external device (e.g., the external device 108 in FIG. 12).

Referring to FIG. 13, the electronic device 101 may obtain information from an original image 1 (1305). For example, the obtained information may include the type of an original image 1, the size of the original image 1, the type of object, the shape of the object, the placement of the object, the size of the object, the position of the object, an area related to image regeneration, vector information related to the original image 1, vector information related to the object, and/or a resource.

The electronic device 101 may transmit the obtained information to the external device 108 (e.g., a server) (1310). The electronic device 101 may transmit information required for regeneration (e.g., the information obtained from the original image 1) to the external device 108 to protect privacy. Alternatively, the electronic device 101 may transmit the original image 1 itself to the external device 108.

The external device 108 may determine the type of the original image 1 from the received information (1315). Alternatively, the type of the original image 1 may be included in the information about the original image 1 received from the electronic device 101. For example, the type of the original image may include a portrait image, an object image, an animal image, a landscape image, and/or a graphic image.

The external device 108 may analyze a main object, based on the determined type of the original image 1 (1320). For example, when the original image 1 is a portrait image, an object image, and/or an animal image, the external device 108 may analyze whether the shape of a main object is a full shape or a partial shape. When the original image 1 is a landscape image, the external device 108 may analyze whether the landscape image includes a main object. When the original image 1 is a graphic image, the external device 108 may analyze graphic attributes of the original image 1. For example, the graphic attributes may include a figure's shape, size, color, brightness, saturation, line thickness, and/or line style.

The external device 108 may determine a regenerated area, based on the analyzed main object (1325). For example, when the original image 1 is a portrait image, an object image, and/or an animal image, and when the shape of a main object is a full shape, the external device 108 may determine that a surrounding area around the main object is a regenerated area. When the shape of a main object is a partial shape, the external device 108 may configure a surface adjacent to the main object as a reference axis. Then, the external device 108 may determine areas of the remaining surfaces, except the surface of the reference axis, as a regenerated area. When the original image 1 is a landscape image, and when there is a main object, the external device 108 may determine that a surrounding area around the main object is a regenerated area. When there is no main object, the external device 108 may determine that all directions are regenerated areas. When the original image 1 is a graphic image, the external device 108 may generate a similar pattern, based on the analyzed graphic attributes. For example, the similar pattern may be a pattern generated by combining the analyzed graphic attributes. The external device 108 may regenerate an image, based on the generated similar pattern. Thus, when the original image 1 is a graphic image, a regenerated area may be the entire area including the area of the original image 1.

The external device 108 may determine whether a background area includes a sub-object (1330), and may regenerate an image, based on the regenerated area and the presence or absence of the sub-object (1335). For example, when the original image 1 is a portrait image, an object image, and/or an animal image, the external device 108 may regenerate the surrounding area of the original image 1 according to the shape of a main object, based on an attribute of a background area and/or an attribute of a sub-object. When the original image 1 is a landscape image, the external device 108 may regenerate the surrounding area of the original image 1 according to the presence or absence of a main object, based on an attribute of a background area and/or an attribute of a sub-object. When the original image 1 is a graphic image, the external device 108 may regenerate the entire area, including the area of the original image 1 and the surrounding area thereof, based on a generated similar pattern.

The external device 108 may obtain information from the regenerated image (1340) and transmit the obtained information about the regenerated image to the electronic device 101 (1345). For example, the obtained information about the regenerated image may include the size of the regenerated image, the placement of an object, the position of the object, an area related to the regeneration, the position of a regenerated area, the size of the regenerated area, vector information related to the regenerated image, vector information related to the object, and/or a resource. Alternatively, the external device 108 may transmit the regenerated image itself to the electronic device 101. The electronic device 101 may regenerate an image based on the received information about the regenerated image, and may display the regenerated image (1350).

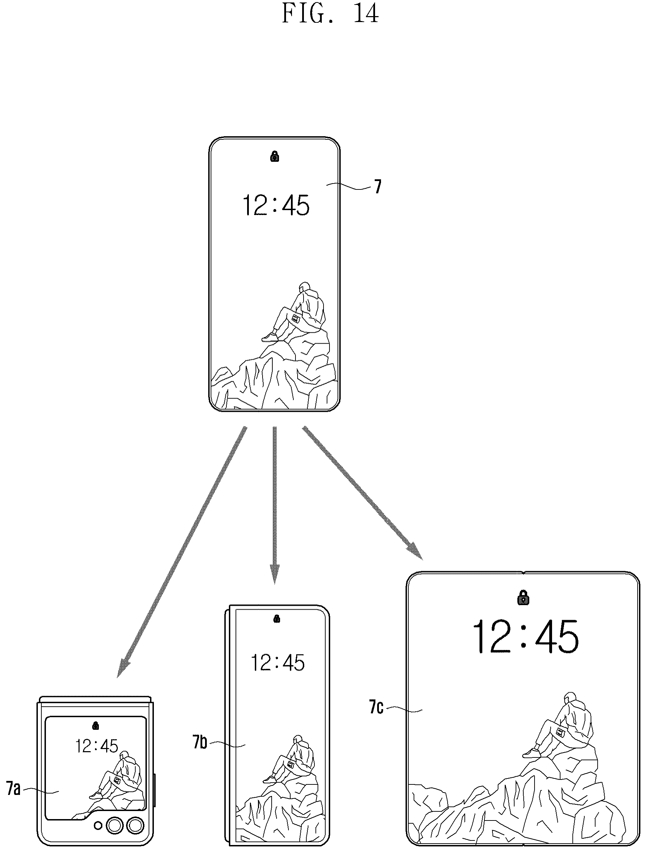

FIG. 14 illustrate regenerated images displayed on various displays according to various embodiments.

The sizes of displays 160 included in various electronic devices 101 may vary. The electronic devices 101 may regenerate an original image 1 to correspond to the sizes of the respective displays 160.

For example, when the display 160 of the electronic device 101 has a size of 6 cm*15 cm, the electronic device 101 may regenerate the original image 1 such that the size of the regenerated image 7 is 6 cm*15 cm. For example, the display of a first electronic device may have a size of 4cm*4cm, the display of a second electronic device may have a size of 3cm*20cm, and the display of a third electronic device may have a size of 13cm*13cm. In this case, the first electronic device may regenerate an image 7a having a size of 4cm*4cm by using the same original image 1, the second electronic device may regenerate an image 7b having a size of 3cm*20cm by using the same original image 1, and the third electronic device may regenerate an image 7c having a size of 13cm*13cm by using the same original image 1.

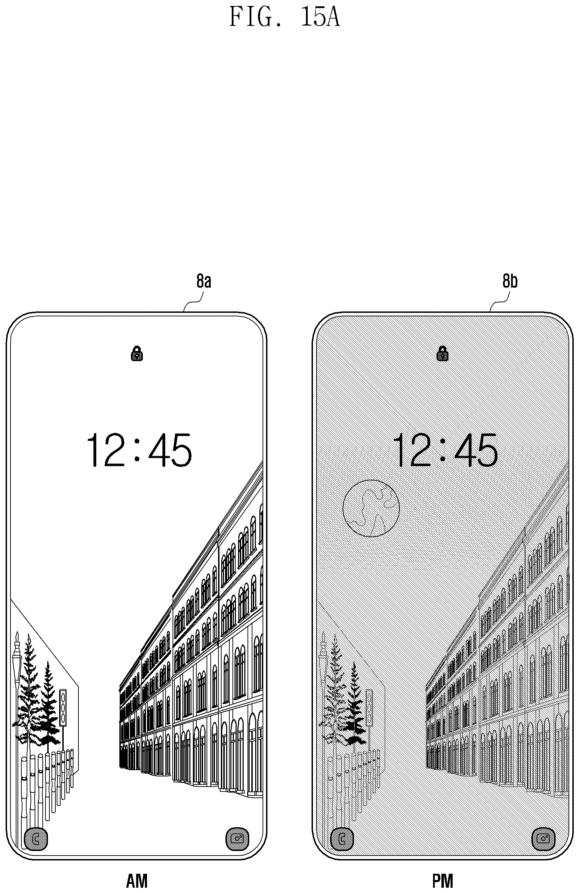

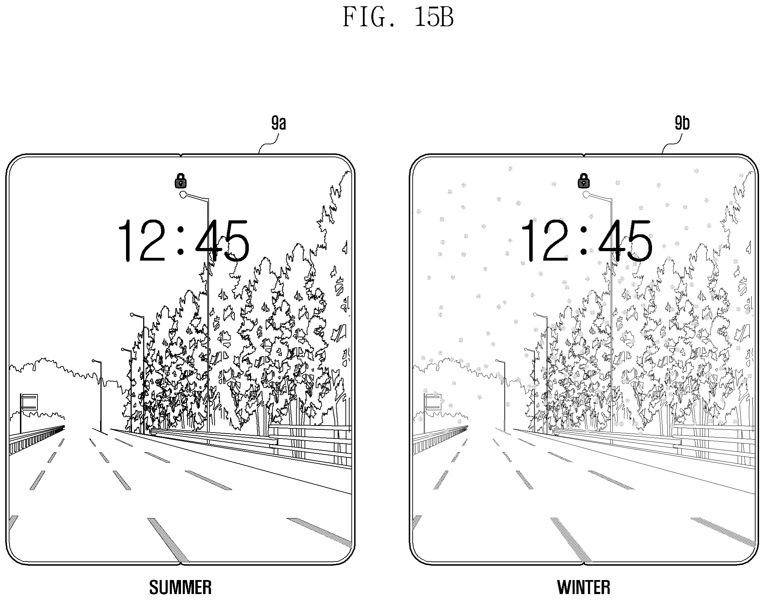

FIGS. 15A and 15B illustrate images that change in response to the surrounding environment according to various embodiments.

The electronic device 101 may modify (or apply effects to) regenerated images 8a, 8b, 9a, and 9b depending on the surrounding environment. For example, the surrounding environment may include time, weather, and/or season.

Referring to FIG. 15A, the regenerated images 8A and 8B that have been changed over time are illustrated. For example, during the day, the electronic device 101 may modify (or apply an effect to) the regenerated image 8a into an image corresponding to daytime, which is a bright background. During the night, the electronic device 101 may modify (or, apply an effect to) the regenerated image 8b into an image corresponding to nighttime, which is a dark background with the moon and/or lights.

Referring now to FIG. 15B, the regenerated images 9a and 9b, which have been changed according to the season, are illustrated. During summer, the electronic device 101 may modify (or apply an effect to) the regenerated image 9a with an image corresponding to summer. During winter, the electronic device 101 may modify (or apply an effect to) the regenerated image 9b into an image corresponding to winter, including leaf removal and/or snow. Alternatively, the electronic device 101 may modify (or apply an effect to) the regenerated image to include sunny, cloudy, snowy, or rainy conditions, depending on the weather.

When one image is selected by a user, the electronic device 101 may recommend images related to a person, a capture time, and/or a capture location included in the selected image. For example, the electronic device 101 may identify the priority of related images based on image tilt, image brightness, main object sharpness, image margin ratio, and/or margin brightness. The electronic device 101 may recommend a preset number of related images, based on the identified priority. One image may be selected from among the user-selected image and the recommended images. The selected image may be an original image. The electronic device 101 may identify the type of the selected image. For example, the type of the image may include a portrait image, an animal image, a landscape image, and/or a graphic image.

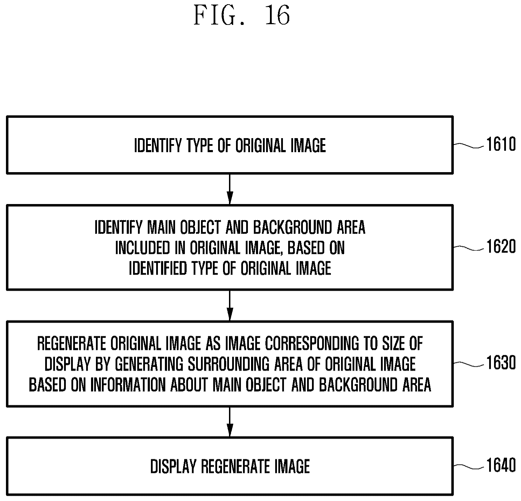

FIG. 16 is a flowchart illustrating an image regeneration method according to various embodiments.

Referring to FIG. 16, the electronic device 101 may identify the type of an original image 1 (1610). For example, the type of the original image may include a portrait image, an object image, an animal image, a landscape image, and/or a graphic image.

The electronic device 101 may identify information about a main object and information about a background area, which are included in the original image, based on the identified type of the original image 1 (1620). The electronic device 101 may analyze the main object, based on the determined type of the original image 1. For example, when the original image 1 is a portrait image, an object image, and/or an animal image, the electronic device 101 may analyze whether the shape of a main object is a full shape or a partial shape. When the original image 1 is a landscape image, the electronic device 101 may analyze whether the landscape image includes a main object. When the original image 1 is a graphic image, the external device 108 may analyze graphic attributes of the original image 1. For example, the graphic attributes may include a figure's shape, size, color, brightness, saturation, line thickness, and/or line style.

The electronic device 101 may determine a regenerated area, based on the analyzed main object. For example, when the original image 1 is a portrait image, an object image, and/or an animal image, and when the shape of a main object is a full shape, the electronic device 101 may determine a surrounding area around the main object is a regenerated area. When the shape of the main object is a partial shape, the electronic device 101 may configure a surface adjacent to the main object as a reference axis. Then, the electronic device 101 may determine that the area of the remaining surface other than the surface of the reference axis is a regenerated area. When the original image 1 is a landscape image, and when there is a main object, the electronic device 101 may determine that a surrounding area around the main object is a regenerated area. When there is no main object, the electronic device 101 may determine that all directions are regenerated areas. When the original image 1 is a graphic image, the external device 108 may generate a similar pattern, based on analyzed graphic attributes. For example, the similar pattern may be a pattern generated by combining the analyzed graphic attributes. The electronic device 101 may regenerate an image, based on the generated similar pattern. Thus, when the original image 1 is a graphic image, the regenerated area may be the entire area including the area of the original image 1.

The electronic device 101 may determine information about a background area, based on whether the background area includes a sub-object. For example, the information about the background area may include an attribute of the background area and/or an attribute of the sub-object. When a background area does not include a sub-object, the electronic device 101 may determine that an attribute of the background area is information about the background area. When the background area includes a sub-object, the electronic device 101 may determine that an attribute of the sub-object is information about the background area. Furthermore, even when the background area includes the sub-object, the electronic device 101 may additionally determine that an attribute of the background area is the information about the background area.

Based on the information about the main object and the information about the background area, the electronic device 101 may generate a surrounding area of the original image 1 to regenerate the original image into an image corresponding to the size of a display (1630). For example, when the original image 1 is a portrait image, an object image, and/or an animal image, the external device 108 may regenerate a surrounding area of the original image 1 according to the shape of a main object, based on an attribute of a background area and/or an attribute of a sub-object. When the original image 1 is a landscape image, the external device 108 may regenerate a surrounding area of the original image 1 according to the presence or absence of a main object, based on an attribute of a background area and/or an attribute of a sub-object. When the original image 1 is a graphic image, the external device 108 may regenerate the entire area, including the area of the original image 1 and a surrounding area thereof, based on a generated similar pattern.

The electronic device 101 may display the regenerated image (1640). The regenerated image may be displayed with at least one object. For example, the at least one object may include an icon, a widget, a notification, a button, text, an image, and/or a pop-up window. The at least one object may be displayed simultaneously with the regenerated image, or may be displayed when predetermined conditions are met. When the regenerated image and the at least one object are displayed together, the electronic device 101 may change the position and/or size of a main area, based on the position of the at least one object and the position of the main area. Furthermore, when the at least one object is transformed or a new object is displayed after the regenerated image is displayed, the electronic device 101 may change the position and/or size of the main area such that the at least one transformed object or the new object does not interfere with the main area. Alternatively, the electronic device 101 may blur an area, in which the at least one object is to be displayed, in the regenerated image. In one example, the electronic device 101 may process the regenerated image to correspond to weather, season, and/or time. The electronic device 101 may use an image-generative artificial intelligence model to perform the process of image recommendation, image regeneration, and/or image modification. In one example, the electronic device 101 may include a display 160 and at least one processor 120. The at least one processor 120 may identify the type of original image. Based on the identified type of the original image, the at least one processor 120 may identify information about a main object and information about a background area, which are included in the original image. The at least one processor 120 may regenerate the original image into an image corresponding to the size of the display by generating a surrounding area of the original image, based on the information about the main object and the information about the background area. The at least one processor 120 may control the display 160 to display the regenerated image.

In one example, the at least one processor 120 may identify the shape of the main object when the type of the original image is at least one of a portrait image, an object image, and an animal image. When the shape of the main object is a full shape, the at least one processor 120 may regenerate the original image by generating a surrounding area of the original image around the main object.

In one example, the at least one processor 120 may identify an edge of the original image adjacent to the main object as a reference axis, when the main object has a partial shape. The at least one processor 120 may regenerate the original image by generating surrounding areas of the original image in the directions of edges other than the identified reference axis.

In one example, the at least one processor 120 may determine the presence or absence of the main object when the type of the original image is a landscape image. When the main object is present in the landscape image, the at least one processor 120 may regenerate the original image by generating a surrounding area of the original image around the main object. When the main object is not present in the landscape image, the at least one processor 120 may regenerate the original image by generating surrounding areas of the original image in the directions of all edges of the original image.

In one example, the at least one processor 120 may identify attribute information of a graphic image when the type of the original image is the graphic image. The at least one processor 120 may regenerate the original image, based on the identified attribute information.

In one example, the at least one processor 120 may generate a pattern similar to a pattern in the original image, based on the identified attribute information. The at least one processor 120 may regenerate the original image, based on the generated similar pattern.

In one example, the attribute information may include at least one of shape, size, color, brightness, saturation, pattern, line thickness, and line style.

In one example, the at least one processor 120 may identify whether the background area includes a sub-object. When the sub-object is included, the at least one processor 120 may generate the surrounding area of the original image, based on at least one of a shape, a size, a color, brightness, a saturation, a pattern, a line thickness, and a line style of the sub-object adjacent to the surrounding area of the original image. When the sub-object is not included, the at least one processor 120 may generate the surrounding area of the original image, based on at least one of a color, brightness, and a saturation of the background area adjacent to the surrounding area of the original image.

In one example, when the regenerated image and at least one object are displayed together, the at least one processor 120 may change at least one of the position and size of the main area, based on the position of the at least one object and the position of the main area.

In one example, when, after the regenerated image is displayed, the at least one object is transformed or a new object is displayed, the at least one processor 120 may change at least one of the position and size of the main area such that the at least one transformed object or the new object does not interfere with the main area.

In one example, the at least one processor 120 may blur an area of the regenerated image in which at least one object is to be displayed.

In one example, the at least one object may include at least one of an icon, a widget, a notification, a button, text, an image, and a pop-up window.

In one example, the at least one processor 120 may process the regenerated image to correspond to at least one of weather, season, and time.

In one example, when one image is selected, the at least one processor 120 may recommend images related to at least one of a person, a capture time, and a capture location included in the selected image.

In one example, the at least one processor 120 may identify the priority of the related images, based on at least one of image tilt, image brightness, main object sharpness, image margin ratio, and margin brightness, and recommend a predetermined number of related images, based on the identified priority.

In one example, the at least one processor 120 may use an image-generative artificial intelligence model to perform at least one of operations of identifying the type of the original image, identifying the main object and the background area, and regenerating an image that matches the size of the display.

In one example, an image regeneration method may identify the type of original image. Based on the identified type of the original image, the method may identify information about a main object included in the original image and information about a background area included in the original image. Based on the information about the main object and the information about the background area, the method may generate a surrounding area of the original image and regenerate the original image into an image corresponding to a size of the display. The method may display the regenerated image.

In one example, in the operation of identifying the main object and the background area, the shape of the main object may be identified when the type of the original image is at least one of a portrait image, an object image, and an animal image. In the regenerating operation, when the shape of the main object is a full shape, the original image may be regenerated by generating a surrounding area of the original image around the main object.

In one example, in the operation of identifying the main object and the background area, the presence or absence of the main object may be determined when the type of the original image is a landscape image. In the regenerating operation, when the main object is present in the landscape image, the original image may be regenerated by generating a surrounding area of the original image around the main object. In the regenerating operation, when the main object is not present in the landscape image, the original image may be regenerated by generating surrounding areas of the original image in the directions of all edges of the original image.

In one example, in the operation of identifying the main object and the background area, when the type of the original image is a graphic image, attribute information of the graphic image may be identified. In the regenerating operation, the original image may be regenerated based on the identified attribute information.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects herein are not limited to those mentioned above, and other effects not mentioned will be clearly understood by those skilled in the art from the above description.

## Claims

1. An electronic device comprising:
a display; and
at least one processor,
wherein the at least one processor is configured to:
identify a type of original image;
based on the identified type of the original image, identify information about a main object and information about a background area, which are included in the original image;
regenerate the original image into an image corresponding to a size of the display by generating a surrounding area of the original image, based on the information about the main object and the information about the background area; and
control the display to display the regenerated image.

2. The electronic device of claim 1, wherein the at least one processor is configured to:
identify a shape of the main object in case that a type of the original image is at least one of a portrait image, an object image, and an animal image; and
regenerate the original image by generating a surrounding area of the original image around the main object in case that the shape of the main object is a full shape.

3. The electronic device of claim 2, wherein the at least one processor is configured to:
identify an edge of the original image adjacent to the main object as a reference axis, in case that the main object has a partial shape; and
regenerate the original image by generating surrounding areas of the original image in directions of edges other than the identified reference axis.

4. The electronic device of claim 1, wherein the at least one processor is configured to:
in case that the type of the original image is a landscape image, determine presence or absence of the main object;
in case that the main object is present in the landscape image, regenerate the original image by generating a surrounding area of the original image around the main object; and
in case that the main object is not present in the landscape image, regenerate the original image by generating surrounding areas of the original image in directions of all edges of the original image.

5. The electronic device of claim 1, wherein the at least one processor is configured to:
identify attribute information of the graphic image in case that the type of the original image is a graphic image; and
regenerate the original image, based on the identified attribute information.

6. The electronic device of claim 5, wherein the at least one processor is configured to:
generate a pattern similar to a pattern in the original image, based on the identified attribute information; and
regenerate the original image, based on the generated similar pattern.

7. The electronic device of claim 5, wherein the attribute information comprises at least one of shape, size, color, brightness, saturation, pattern, line thickness, and line style.

8. The electronic device of claim 1, wherein the at least one processor is configured to:
identify whether the background area comprises a sub-object;
in case that the sub-object is included, generate the surrounding area of the original image, based on at least one of a shape, a size, a color, brightness, a saturation, a pattern, a line thickness, and a line style of the sub-object adjacent to the surrounding area of the original image; and
in case that the sub-object is not included, generate the surrounding area of the original image, based on at least one of a color, brightness, and a saturation of the background area adjacent to the surrounding area of the original image.

9. The electronic device of claim 1, wherein the at least one processor is configured to, in case that the regenerated image and at least one object are displayed together, change at least one of a position and a size of the main area, based on a position of the at least one object and the position of the main area.

10. The electronic device of claim 1, wherein the at least one processor is configured to, in case that, after the regenerated image is displayed, the at least one object is transformed or a new object is displayed, change at least one of the position and size of the main area such that the at least one transformed object or the new object does not interfere with the main area.

11. The electronic device of claim 1, wherein the at least one processor is configured to blur an area of the regenerated image in which at least one object is to be displayed.

12. The electronic device of claim 11, wherein the at least one object comprises at least one of an icon, a widget, a notification, a button, text, an image, and a pop-up window.

13. The electronic device of claim 1, wherein the at least one processor is configured to process the regenerated image to correspond to at least one of weather, season, and time.

14. The electronic device of claim 1, wherein the at least one processor is configured to, in case that one image is selected, recommend images related to at least one of a person, a capture time, and a capture location included in the selected image.

15. The electronic device of claim 14, wherein the at least one processor is configured to:
identify priority of the related images, based on at least one of image tilt, image brightness, main object sharpness, image margin ratio, and margin brightness; and
recommend a predetermined number of related images, based on the identified priority.
